# EUROPEAN PATENT APPLICATION

(11) **EP 1 553 386 A2**
(43) Date of publication of application: **13.07.2005**
(21) Application number: 04078518.0
(22) Date of filing: 23.12.2004
(51) Int. Cl.: G01D 5/14

(54) **System and method for sensing angular position using ring magnet with sensor in flux return path**

(30) Priority: 08.01.2004 US 754026
(71) Applicant: Delphi Technologies, Inc., Troy, MI 48007 (US)
(72) Inventor: Omekanda, Avoki M., Rochester, MI 48306 (US); Lequesne, Bruno P.B., Troy, MI 48084 (US); Schroeder, Thaddeus, Rochester Hills, MI 48309 (US)
(74) Representative: Denton, Michael John

(57) **Abstract**

A Hall effect sensor (20) is positioned in the return lines (16) of the magnetic flux of a ring magnet (12) that is engaged with a rotating member the angular position of which is sought to be measured. The signal from the Hall sensor (20) indicates the angular position of the rotating member.

## Description

### TECHNICAL FIELD

The present invention relates to angular position sensors.

### BACKGROUND OF THE INVENTION

Angular position sensors can be established using a ring magnet that is coupled to a component, such as a vehicle drive shaft or vehicle steering column, whose angular position is sought to be measured for, e.g., use in control systems such as ignition systems, steering systems, and speed control systems. A magnetic sensor can be placed in the main magnetic field of the magnet, i.e., in the magnetic field lines emanating away from the magnet, to sense the flux, which, because it is a sinusoidal function of angle, indicates the angular position sought to be measured. Such a device does not require contact between the magnet and sensor and, hence, would be advantageous in many applications, including as a steering column position sensor. As recognized herein, however, radial movement of the magnet with respect to the sensor (referred to as "eccentricity") caused by, e.g., vibration, can reduce the effectiveness of such a device, which is a large reason why ring magnets generally are not used in angular position sensing applications that are susceptible to eccentricity.

### SUMMARY OF THE INVENTION

A system for outputting a signal representative of the angular position of a rotatable member includes a ring magnet that can be coupled to the rotatable member. The magnet defines magnetic flux lines, portions of which are main flux lines emanating away from the magnet and portions of which are return flux lines returning to the magnet. A magnetic field sensor is disposed in at least one return flux line for outputting a signal representative of the angular position of the magnet and, hence, of the rotatable member.

In one embodiment, the sensor is disposed radially outside of an outer diameter of the magnet. The sensor may be a Hall effect sensor.

As set forth further below, in one configuration the sensor can be oriented to sense a radial component of magnetic flux. In this configuration it is preferred that the sensor is located in a return flux line at a location where the return flux line is substantially parallel to an annular surface of the magnet. In another configuration the sensor may be oriented to sense an axial component of magnetic flux. For convenient packaging, in this configuration the sensor can be disposed substantially in the plane defined by the magnet. The rotatable member may be a vehicle component.

In another aspect, a method for determining an angular position of a rotatable member includes providing a disk-shaped magnet defining magnetic flux lines, portions of which are main flux lines and portions of which are return flux lines. The method includes sensing magnetic flux in at least one return flux line, and then outputting a signal representative of the angular position of the magnet, based thereon.

In still another aspect, an angular position sensing system includes magnet means for generating a magnetic field, and sensing means disposed in return flux lines generated by the magnet means for outputting a signal representative of an angular position.

The present invention will now be described, by way of example, with reference to the accompanying drawings, in which:

### BRIEF DESCRIPTION OF THE DRAWINGS

Figure 1 is a perspective view of the ring magnet angular position sensing assembly of the present invention, showing a single magnetic flux line and indicating the direction of magnetization of the magnet;
Figure 2 is a schematic diagram of a portion of the top half of the magnet, showing regions of flux where a sensor can be located to sense the radial component of magnetic flux;
Figure 3 is a schematic diagram of a portion of the ring magnet, showing a sensor placed for sensing the axial component of magnetic flux;
Figure 4 is a perspective cut-away view of a portion of the magnet, showing how a sensor can by physically mounted for sensing the axial component of flux;
Figure 5 is a schematic diagram showing the ring magnet coupled to a rotating shaft;
Figure 6 is a schematic diagram showing the ring magnet coupled to a rotating plate; and
Figure 7 is a schematic diagram showing the sensor assembly placed inside a ring magnet.

### DESCRIPTION OF AN EMBODIMENT OF THE INVENTION

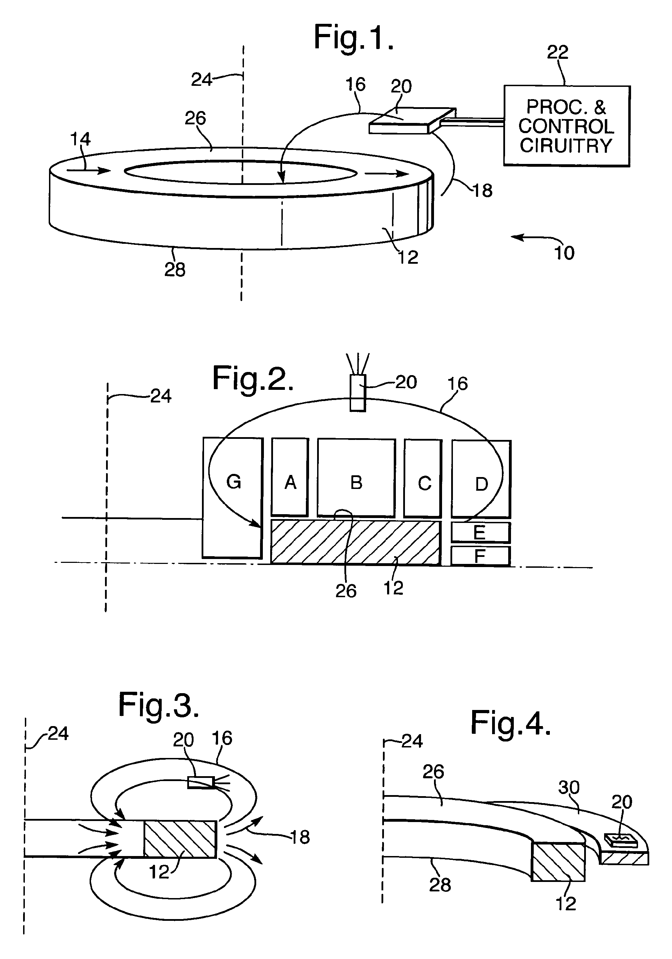

Referring initially to Figure 1, a system is shown, generally designated 10, which includes a ring magnet 12 having a direction of magnetization 14, resulting in magnetic flux lines that extend beyond the outer diameter of the magnet 12. Specifically, the flux lines include a return flux line portion 16 and a main flux line portion 18, with the main flux line portion emanating away from the magnet 12 and the return flux line portion 16 returning toward the magnet 12 in accordance with ring magnet principles known in the art.

A magnetic sensor 20 is disposed in the return flux line portion 16 as shown and as discussed more fully below, so that the signal from the sensor 20 is less susceptible to the effects of eccentricity discussed above as compared to a sensor disposed in the main flux lines 18. The sensor 20 may be, e.g., a Hall sensor or magnetoresistor (MR). As the magnet 12 rotates, the magnetic field varies sinusoidally, producing a signal in the sensor 20 that can be sent to processing and control circuitry 22 (e.g., a vehicle onboard computer and/or any of the control systems discussed above) as an indication of the angular position of the magnet 12 and, hence, of the angular position of any of the below-described components that can be coupled to the magnet 12. The correlation of the signal from the sensor 20 to angular position may be done using principles known in the art.

The magnet 12 defines a central axis 24 and upper and lower preferably flat, annular surfaces 26, 28. When the magnet 12 is relatively thick, i.e., when the distance between the surfaces 26, 28 is large, the magnetic field lines lie mostly parallel to the surfaces 26, 28. More generally, the magnetic field lines emanate in three dimensions as shown in Figure 1. Regardless, the present invention applies to both thick and thin magnets.

Figure 2 schematically shows areas of the magnetic field, designated "A"-"G". For sensing the radial component of flux, the sensor 20 is preferably located in area "B", i.e., the area in which the return flux line 16 is generally parallel to the surfaces 26, 28 of the magnet 12, although less desirably it may be located in other areas. When sensing the radial component in area B, the long axis of the sensor 20, when it is a Hall effect sensor, preferably is oriented perpendicular to the tangent of the flux line at the position of the sensor 20, as shown in Figure 2. It is to be understood that when a ferromagnetic component is coupled to the magnet 12, the flux lines take paths different than those shown in Figure 2. For example, when the magnet 12 is coupled to a steel shaft that is colinear with the magnet axis 24, area "G" is of course inaccessible and area "B" extends all the way to the shaft, i.e., the return flux lines 16 extend into the shaft perpendicularly to the surface of the shaft.

Figures 3 and 4 illustrate how the sensor 20 (particularly when it is a Hall sensor) may be oriented to sense the axial component of the return flux lines 16. While the system 10 when configured for sensing the axial component is not as immune to the effects of eccentricity as when configured for sensing the radial component, as shown in Figure 4 it has the packaging advantage of allowing the sensor 20 to be laid flat on a surface 30 such as a circuit board that is parallel to the surfaces 26, 28 and located therebetween. When sensing the axial component of flux it is preferred that the sensor 20 is located in the areas "A", "C", or "D" in Figure 2, where the axial flux is the strongest. If return flux exists in area E, the sensor can be disposed in the return flux path there, too.

The long axis of the sensor 20 when it is a Hall effect sensor may be generally parallel to the tangent of the flux line at the position of the sensor 20 in areas "A" and "C" (and if return flux exists in area "E", there too) and generally normal to the flux line in area "D".

It is to be understood that while configurations for sensing the axial and radial components of flux are discussed for simplicity, configurations for sensing any combination of the two are also envisioned herein. Further, while the preferred magnet 12 is annular, it may be a solid disk.

In many cases, ferromagnetic elements are in the vicinity of the system 10, and this increases the flux and isolates the flux pattern from the system from the surrounding space. Generally speaking, it is beneficial to include the system 10 within a partial ferromagnetic enclosure, because a full enclosure would short-circuit the flux. In any case, the areas "A"-"G" in Figure 2 may change shape in the presence of ferromagnetic material.

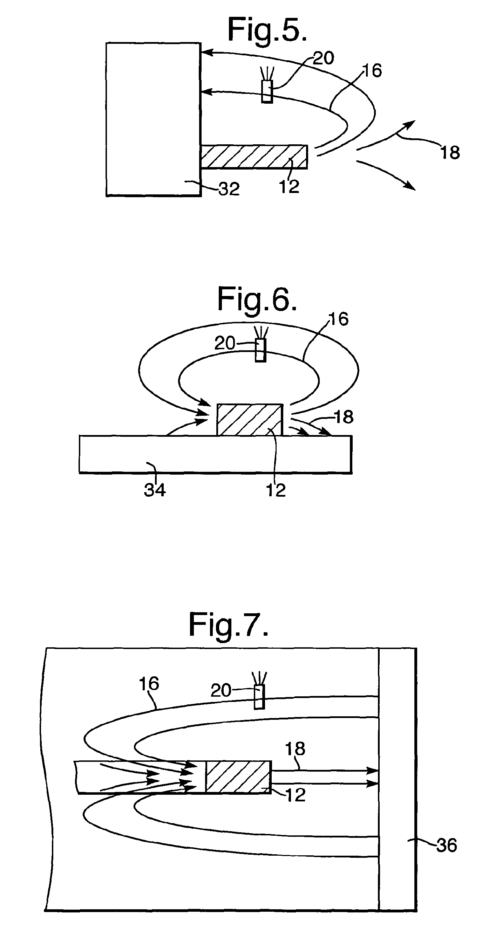

Examples of partial ferromagnetic enclosures are shown in Figures 5-7.

In Figure 5, a rotatable steel shaft 32 such as a steering column is disposed in the annulus of the magnet 12. In this case, the return flux lines 16 are perpendicular to the surface of the shaft as shown, eliminating area "A" in Figure 2 and extending area "B" to the shaft.

Figure 6 shows that the magnet 12 may be placed on a rotatable steel plate 34 to sense its angular position. Areas "E" and "F" in Figure 2 are distorted in this example, and areas "A"-"D" are somewhat weakened but still useful.

Figure 7 shows that the magnet 12 may be placed within a steel ring 36 to sense its angular position. If desired the ring 36 may be rotatable. Areas "C"-"E" in Figure 2 disappear in this example, and an enlarged area "B" extends toward the ring 36. Combinations of shafts, rings, and plates may also be used.

While the particular SYSTEM AND METHOD FOR SENSING ANGULAR POSITION USING RING MAGNET WITH SENSOR IN FLUX RETURN PATH as herein shown and described in detail is fully capable of attaining the above-described objects of the invention, it is to be understood that it is the presently preferred embodiment of the present invention and thus, is representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more." Moreover, it is not necessary for a device or method to address each and every problem sought to be solved by the present invention, for it is to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. section 112, sixth paragraph, unless the element is expressly recited using the phrase "means for."

## Claims

1. A system (10) for outputting a signal representative of the angular position of a rotatable member, comprising:
a ring magnet (12) couplable to the rotatable member, the magnet (12) defining magnetic flux lines, portions of the magnetic flux lines being main flux lines (18) emanating away from the magnet (12) and portions of the magnetic flux lines being return flux lines (16) returning to the magnet (12); and
at least one magnetic field sensor (20) disposed in at least one return flux line (16) and outputting a signal representative of the angular position of the magnet (12).

2. The system (10) of Claim 1, wherein the sensor (20) is disposed radially outside of an outer diameter of the magnet (12).

3. The system (10) of Claim 1, wherein the sensor (20) is a Hall effect sensor.

4. The system (10) of Claim 1, wherein the sensor (20) is oriented to sense a radial component of magnetic flux.

5. The system (10) of Claim 4, wherein the sensor (20) is located in a return flux line (16) at a location where the return flux line (16) is substantially parallel to an annular surface of the magnet (12).

6. The system (10) of Claim 1, wherein the sensor (20) is oriented to sense an axial component of magnetic flux.

7. The system (10) of Claim 6, wherein the magnet (12) defines a central axis (24) and a plane perpendicular to the axis (24), the plane being located between an upper annular magnet surface (26) and a lower annular magnet surface (28), inclusive, the sensor (20) being disposed substantially in the plane.

8. The system (10) of Claim 1, wherein the rotatable member is a vehicle component.

9. A method for determining an angular position of a rotatable member, comprising:
providing a disk-shaped magnet (12) defining magnetic flux lines, portions of the magnetic flux lines being main flux lines (18) and portions of the magnetic flux lines being return flux lines (16) returning to the magnet (12);
sensing magnetic flux in at least one return flux line (16); and
outputting a signal representative of the angular position of the magnet (12), based on the sensing act.

10. The method of Claim 9, wherein the magnet (12) is annular.

11. The method of Claim 9, wherein the sensor (20) is a Hall effect sensor.

12. The method of Claim 9, comprising orienting the sensor (20) to sense a radial component of magnetic flux.

13. The method of Claim 12, comprising locating the sensor (20) in a return flux line (16) at a location where the return flux line (16) is substantially parallel to an annular surface of the magnet (12).

14. The method of Claim 9, comprising orienting the sensor (20) to sense an axial component of magnetic flux.

15. The method of Claim 14, wherein the magnet (12) defines a central axis (24) and a plane perpendicular to the axis (24), the plane being located between an upper annular magnet surface (26) and a lower annular magnet surface (28), inclusive, and the method includes disposing the sensor (20) substantially in the plane.

16. The method of Claim 9, wherein the rotatable member is a vehicle component.

17. An angular position sensing system (10), comprising:
magnet means (12) for generating a magnetic field; and
sensing means (20) disposed in return flux lines (16) generated by the magnet means (12) for outputting a signal representative of an angular position.

18. The system (10) of Claim 17, wherein the magnet means (12) is a ring magnet (12) and the sensing means is a sensor (20).

19. The system (10) of Claim 18, wherein the sensor (20) is a Hall effect sensor.

20. The system (10) of Claim 18, wherein the sensor (20) is oriented to sense a radial component of magnetic flux.

21. The system (10) of Claim 20, wherein the sensor (20) is located in a return flux line (16) at a location where the return flux line (16) is substantially parallel to an annular surface (26, 28) of the magnet (12).

22. The system (10) of Claim 18, wherein the sensor (20) is oriented to sense an axial component of magnetic flux.

23. The magnet (12) of Claim 22, wherein the magnet (12) defines a central axis (24) and a plane perpendicular to the axis (24), the plane being located between an upper annular magnet surface (26) and a lower annular magnet surface (28), inclusive, the sensor (20) being disposed substantially in the plane.

24. The method of Claim 17, comprising a rotatable vehicle component coupled to the magnet means (12).
